# EUROPÄISCHE PATENTSCHRIFT

(11) **EP 1 511 992 B1**
(45) Veröffentlichungstag und Bekanntmachung des Hinweises auf die Patenterteilung: **11.07.2007**
(21) Anmeldenummer: 03798902.7
(22) Anmeldetag: 12.09.2003
(51) Int. Cl.: G01N 21/64, G01N 21/76

(54) **VERFAHREN UND VORRICHTUNG ZUM DETEKTIEREN MINDESTENS EINES LUMINESZENZ-STOFFS**
METHOD AND DEVICE FOR THE DETECTION OF AT LEAST ONE LUMINESCENT SUBSTANCE
PROCEDE ET DISPOSITIF DE DETECTION D'AU MOINS UNE MATIERE LUMINESCENTE

(30) Priorität: 27.09.2002 DE 10245432
(43) Veröffentlichungstag der Anmeldung: 09.03.2005
(73) Patentinhaber: Micronas Holding GmbH, 79108 Freiburg (DE); Micronas GmbH, 79108 Freiburg i. Br. (DE); Klapproth, Holger, Dr., 79108 Freiburg (DE)
(72) Erfinder: KLAPPROTH, Holger, 79108 Freiburg (DE); LEHMANN, Mirko, 79117 Freiburg (DE)
(74) Vertreter: Huwer, Andreas
(86) Internationale Anmeldenummer: PCT/EP2003/010144
(87) Internationale Veröffentlichungsnummer: WO 2004/031747

(56) Entgegenhaltungen:
- EP-A- 0 640 828
- US-A- 4 868 103
- US-A- 5 061 076
- US-A- 5 885 843

## Beschreibung

Die Erfindung betrifft eine Vorrichtung zum Detektieren mindestens eines Lumineszenz-Stoffs, mit einer Strahlungsquelle zur Aussendung von Anregungsstrahlung auf den mindestens einen Lumineszenz-Stoff, wobei die Anregungsstrahlung wenigstens eine Anregungswellenlänge aufweist, bei welcher der Lumineszenz-Stoff zur Abgabe von Lumineszenzstrahlung angeregt wird, mit wenigstens einem für die Anregungsstrahlung unempfindlichen Strahlungsempfänger zum Detektieren der Lumineszenzstrahlung, wobei der Lumineszenz-Stoff im Inneren einer Messkammer angeordnet ist, die für die Strahlung, für die der Strahlungsempfänger empfindlich ist, im Wesentlichen undurchlässig ist, und wobei die Strahlungsquelle außerhalb der Messkammer derart angeordnet ist, dass die Anregungsstrahlung durch einen der Strahlungsquelle zugewandten, für die Anregungsstrahlung transparenten Wandungsbereich der Messkammer hindurch in das Innere der Messkammer eingekoppelt wird.

Eine derartige Vorrichtung ist aus EP-A-0 640 828 bekannt. Sei weist eine Messkammer auf, die einen durch einen dichroitischen Spiegel gebildeten Wandungsbereich hat, hinter dem außerhalb der Messkammer eine Strahlungsquelle angeordnet ist, die durch den Wandungsbereich hindurch eine Anregungsstrahlung mit einer Wellenlänge von etwa 302 nm (UV) in die Messkammer aussendet. Im inneren der Messkammer sind mehrere Reaktionsgefäße vorgesehen, in denen Proben angeordnet sind, die mit einem Lumineszenz-Stoff markiert sind. Der Lumineszenz-Stoff wird durch die Anregungsstrahlung zur Abgabe einer Lumineszenzstrahlung angeregt, deren Wellenlänge sich von derjenigen der Anregungsstrahlung unterscheidet. Die Messkammer ist für die Lumineszenzstrahlung undurchlässig. Zur Detektion der Lumineszenzstrahlung ist in der Messkammer eine CCD-Kamera mit Abstand zu den Proben angeordnet. Die Vorrichtung ist relativ kompliziert aufgebaut.

Einer aus US-A-4 868 103 bekannte Vorrichtung weist als Strahlungsquelle eine Blitzlampe und als Strahlungsempfänger eine Photomultiplier-Röhre auf Zwischen der Strahlungsquelle und einer zu untersuchenden, einen Lumineszenz-Stoff enthaltenden Probe einerseits sowie zwischen der Probe und dem Strahlungsempfänger andererseits ist jeweils ein optisches Interferenz-Filter angeordnet. Die Vorrichtung ist daher entsprechend teuer.

Aus US-A-5 885 843 ist ferner eine Vorrichtung mit einer Messkammer bekannt, in der ein Photolumineszenz-Aerogel angeordnet ist. Als Strahlungsquelle ist außerhalb der Messkammer eine UV-Lampe vorgesehen, die durch ein optisches Filter hindurch UV-Strahlung in die Messkammer einstrahlt. Durch die UV-Strahlung wird Photolumineszenz-Aerogel zur Abgabe von sichtbarem. Lumineszenzlicht angeregt, das mit einer Photodiode detektiert wird Um zu verhindern, dass von der Strahlungsquelle abgestrahltes sichtbares Licht zu der Photodiode gelangt, ist das optische Filter für das Lumineszenzlicht undurchlässig. Auch diese Vorrichtung weist noch einen relativ komplizierten Aufbau auf.

Es besteht deshalb die Aufgabe, eine Vorrichtung der eingangs genannten Art zu schoffen, die einen einfachen und kostengünstigen Aufbau ermöglicht.

Diese Aufgabe wird dadurch gelöst, dass der Wandungsbereich durch ein Halbleitersubstrat gebildet ist, und dass der wenigstens eine Strahlungsempfänger als Halbleiterbauelement in das Halbleitersubstrat integriert ist.

In vorteilhafter Weise erfüllt also das Halbleitersubstrat eine Doppelfunktion und dient außer als Träger für den wenigstens einen Strahlungsempfänger auch als Fenster zum Einkoppeln der Anregungs-Strahlung in die Messkammer. Die Messkammer kann dann mit Methoden der Mikrosystemtechnik besonders kostengünstig hergestellt werden. Dabei kann die Vorrichtung sehr kompakte Abmessungen aufweisen. Die Messkammer schirmt in dem mit dem Strahlungsempfänger detektierbaren Wellenlängenbereich den mindestens einen in der Messkammer oder innerhalb deren Außenkontur befindlichen Strahlungsempfänger gegen außerhalb der Messkammer auftretende Streu- oder Störstrahlung ab. Dabei wird die Streustrahlung beim Eindringen in die Wandung der Messkammer entweder vollständig ausgelöscht oder zumindest so stark abgeschwächt, dass sie nach dem Durchdringen der Wandung praktisch nicht mehr von dem Strahlungsempfänger detektiert wird. Somit wird in dem zu detektierenden Wellenlängenbereich eine hohe Störsicherheit der Messung gegenüber Fremd- oder Streustrahlung erreicht.

Gegebenenfalls kann die Vorrichtung auch als Optokoppler Verwendung finden. Dabei kann die Strahlungsquelle zur Übertragung eines Signals mit einer Modulationseinrichtungseinrichtung und der Strahlungsempfänger mit einer Demodulationseinrichtung verbunden sein. Unter Lumineszenz werden alle Emissionen von Strahlungsquanten verstanden, vor allem Leuchterscheinungen, wie Fluoreszenz oder Phosphoreszenz, die Stoffe nach quantenhafter Anregung zeigen.

Bei einer zweckmäßigen Ausgestaltung der Erfindung ist das Halbleitersubstrat ein Siliziumsubstrat. Silizium ist für Infrarotlicht mit einer Wellenlänge von gröBer als etwa 1080 nm durchlässig, so dass als Strahlungsquelle zum Anregen des Lumineszenz-Stoffs eine Infrarot-Strahlungsquelle vorgesehen sein kann. Der Strahlungsempfänger kann eine in das Halbleitersubstrat integrierte Silizium-Photodiode sein, die in diesem Wellenlängenbereich unempfindlich ist, sein.

Bei einer besonders vorteilhaften Ausführungsform der Erfindung ist die Vorrichtung als Wärmebildkamera ausgebildet, die in der Messkammer eine Vielzahl von vorzugsweise in Form einer zweidimensionalen Matrix angeordneten Strahlungsempfängern aufweist denen wenigstens eine Abbildungsoptik zum Abbilden der Strahlungsquelle auf die Strahlungsempfänger zugeordnet ist. Im Inneren der Messkammer kann in diesem Fall eine sich durchgängig über die Strohlungsempfänger erstreckende Lumineszenz-Stoffschicht angeordnet sein. Es ist aber auch denkbar, dass die Lumineszenz-Stoffschicht zwischen den Strahlungsempfängern Unterbrechungen aufweist. Die Lumineszenz-Stoffschicht kann gegebenenfalls den Raum zwischen den beidseits der Lumineszenz-Stoffschicht angeordneten Wandungen der Messkammer vollständig ausfüllen, d.h. die Wandungen bilden mit der Lumineszenz-Stoffschicht einen Schichtstapel. Die Abbildungsoptik ist vorzugsweise außerhalb der Messkammer zwischen dieser und der Strahlungsquelle angeordnet.

Bei einer bevorzugten Ausführungsform der Erfindung ist der Lumineszenz-Stoff derart ausgebildet, dass die Wellenlänge der Lumineszenzstrahlung kleiner ist als die Anregungswellenlänge. Derartige aufwärtskonvertierende Lumineszenz-Stoffe sind an sich bekannt, beispielsweise aus EP 0 723 146 A1. Als Beispiele für aufwärtskonvertierende Lumineszenz-Stoffe seien die Farbstoff BND der Dyomics GmbH, Jena und lR-140 erwähnt. Anders als abwärtskonvertierende Lumineszenz-Stoffe beziehen aufwärtskonvertierende Lumineszenz-Stoffe die für die Quantenemission benötigte Energie nicht aus einem einzigen sondern aus mehreren Quanteneffekten. Aufwärtskonvertierende Lumineszenz-Stoffe weisen daher im Vergleich zu abwärtskonvertierenden Lumineszenz-Stoffen eine wesentlich größere Stokes-Verschiebung auf, bei welcher die Wellenlänge der Anregungsstrahlung beispielsweise etwa doppelt so groß sein kann wie die Wellenlänge der Lumineszenz-Strahlung. Dadurch ist es möglich, als Strahlungsquelle eine Infrarot-Halbleiterstrahlungsquelle, insbesondere eine Halbleiterlaserdiode vorzusehen, die bei kompakten Abmessungen eine hohe Strahlungsintensität ermöglicht. Das Infrarotlicht derartiger Halbleiterstrahlungsquellen hat außerdem den Vorteil, dass gegenüber kurzwelligerer optischer Strahlung weniger Streueffekte auftreten. Mit Hilfe des aufwärtskonvertierenden Lumineszenz-Stoffs kann die von der Halbleiterstrahlungsquelle abgegebene optische Strahlung in sichtbares Licht oder in nahes Infrarot-Licht konvertiert werden, so dass als Strahlungsempfänger ein kostengünstiger optoelektronischer Halbleitersensor vorgesehen sein kann, der in diesem Wellenlängenbereich eine hohe Detekfionsempfindlichkeit aufweist.

Vorteilhaft ist, wenn eine dem Wandungsbereich gegenüberliegende Begrenzungswand der Messkammer als Reflektor zum Reflektieren der Anregungsstrahlung ausgebildet ist. Die in die Messkammer eingekoppelte Strahlung kann dann noch besser zum Anregen des mindestens eines Lumineszenz-Stoffs genutzt werden.

Bei einer anderen vorteilhaften Ausführungsform der Erfindung ist der Wandungsbereich über einen optischen Wellenleiter mit dem Inneren der Messkammer verbunden, wobei der Wellenleiter vorzugsweise parallel zur Erstreckungsebene des Wandungsbereichs, insbesondere an dessen dem Lumineszenz-Stoff zugewandter Innenseite verläuft. Die zur Anregung des Lumineszenz-Stoffs vorgesehene Strahlung wird dann besonders verlustarm in das Innere der Messkammer geleitet, so dass sich entlang des Halbleitersubstrats eine gleichmäßige Anregung des Lumineszenz-Stoffs ergibt. Dabei erfolgt die Anregung des vorzugsweise auf der totalrefelektierenden Begrenzungsfläche des Wellenleiters oder dicht benachbart dazu angeordneten Lumineszenz-Stoffs über das Evaneszenzfeld der in dem Wellenleiter geführten Strahlung. Die Einkopplung der Strahlung in den Wellenleiter kann mit Hilfe eines Prismas und/oder eines optischen Gitters erfolgen, an welchem die Strahlung derart abgelenkt wird, dass sie beim Auftreffen auf eine Begrenzungsfläche des Wellenleiters der Totalreflexion unterliegt.

Bei einer vorteilhaften Ausführungsform der Erfindung ist ein Messsignalausgang mindestens eines Strahlungsempfängers direkt oder indirekt über eines Auswerteeinrichtung mit einem Transponder zur Übertragung des Messsignals oder eines daraus abgeleiteten Signals zu einem Empfängerteil verbunden, wobei der Transponder vorzugsweise in das Halbleitersubstrat integriert ist. Das mit Hilfe des wenigstens einen Strahlungsempfängers gemessene Messsignal kann dann drahtlos zu dem Empfängerteil übertragen und von dort zu einer Auswerteeinrichtung, einer Anzeigeanrichtung und/oder einem Datenspeicher weitergeleitet werden. Die Vorrichtung ist dann besonders gut für einen mobilen Einsatz geeignet. Gegebenenfalls ist es sogar möglich, die Messkammer mit einem Gegenstand zu verbinden oder in diesen zu integrieren, um eine Überprüfung der Echtheit des Gegenstands zu ermöglichen. Dabei kann der Gegenstand beispielsweise eine Kreditkarte, ein Geldschein oder ein Kleidungsstück (Designerkleidung) sein. Zum Überprüfen der Echtheit des Gegenstands wird die daran angeordnete Messkammer mit dem Anregungslicht bestrahlt und das dabei mit Hilfe des Strahlungsempfängers gemessene Messsignal wird mit einem Referenzsignal verglichen.

Bei einer Ausführungsform der Erfindung sind im inneren der Messkammer wenigstens zwei Lumineszenz-Stoffe mit voneinander abweichender Anregungswellenlänge angeordnet, wobei jedem dieser Lumineszenz-Stoffe jeweils eine Strahlungsquelle mit an die Anregungswellenlänge des jeweiligen Lumineszenz-Stoffs angepasster Spektralverteilung zugeordnet ist. Die Strahlungsquellen können dann ggf moduliert und insbesondere alternierend ein- und ausgeschaltet werden. Durch einen Vergleich des Messsignals des Strahlungsempfängers mit dem Modulationssignal kann auf das Vorhandensein oder Nichtvorhandensein des entsprechenden Lumineszenz-Stoffs in der Messkammer rückgeschlossen werden.

Bei einer zweckmäßigen Ausgestaltung der Erfindung ist die Messkammer als Durchflussmesskammer mit einer Innenhöhlung, wenigstens einer Einlassöffnung und mindestens einer Auslassöffnung ausgebildet. In der Messkammer können dann beispielsweise Biomoleküle oder Biokomponenten untersucht und über die Ein- und Auslassöffnung mit einer Nährflüssigkeit versorgt werden. Dabei kann das Biomolekül beispielsweise Nukleinsäuren oder Derivate davon (DNA, RNA, PNA, LNA, Oligonukleotide, Plasmide, Chromosomen), Peptide, Proteine (Enzym, Protein, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside, Fette, Fettsäuren und/oder Lipide umfassen.

Bei einer bevorzugten Ausführungsform der Erfindung ist in der Innenhöhlung an der Oberfläche wenigstens eines Strahlungsempfängers mindestens ein Rezeptor für einen Liganden, insbesondere für ein Biomolekül, eine biologische Zelle und/oder wenigstens ein Fragment einer solchen immobilisiert, wobei der Ligand mit dem mindestens einen Lumineszenz-Stoff markiert ist. Dabei wird unter einem Rezeptor ein Molekül verstanden, das an einer Oberfläche gebunden werden kann und mit einem zweitem Molekül, dem Liganden, eine Bindung eingehen kann. Rezeptoren sind beispielsweise, aber nicht ausschließlich: Nukleinsäuren und deren Derivate (DNA, RNA, PNA, LNA, Oligonukleotide, Plasmide, Chromosomen), Peptide und Proteine (Enzyme, Proteine, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside. Der Rezeptor kann aber auch komplexere Strukturen, wie z.B. Zellen und deren Fragmente, umfassen. Unter einem Liganden werden Moleküle verstanden, die mit einem Rezeptor eine mehr oder weniger spezifische Bindung eingehen können. Liganden sind beispielsweise, aber nicht ausschließlich: Nukleinsäuren und deren Derivate (DNA, RNA, PNA, LNA, Oligonukleotide, Plasmide, Chromosomen), Peptide und Proteine (Enzyme, Proteine, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside, Fette, Fettsäuren und Lipide, Zellen und deren Fragmente, aber auch alle pharmakologisch und toxikologisch wirksamen Substanzen. Der Rezeptor kann gegebenenfalls auf den Strahlungsempfänger aufgedruckt sein. Zwischen dem Strahlungsempfänger und dem Rezeptor kann eine Polyimidschicht angeordnet sein, um das Anhaften des Rezeptors an dem Strahlungsempfänger zu verbessern.

Vorteilhaft ist, wenn auf dem Halbleitersubstrat mehrere Strahlungsempfänger vorzugsweise in Form eines zweidimensionalen Arrays, nebeneinander angeordnet sind, und wenn auf den Strahlungsempfängern gegebenenfalls unterschiedliche Rezeptoren angeordnet sind. Die Vorrichtung ermöglicht es dann, einen Analyten auf das Vorkommen einer Vielzahl von unterschiedlichen Liganden zu untersuchen.

Besonders vorteilhaft ist, wenn wenigstens zwei der unterschiedlichen Rezeptoren eine unterschiedliche Affinität für wenigstens einen mit dem Lumineszenz-Stoff markierten Liganden aufweisen, und wenn gegebenenfalls mehr als zwei Rezeptoren vorgesehen sind, die eine abgestufte Affinität für den wenigstens einen Liganden aufweisen. Ein Strahlungsempfänger, auf dem ein Rezeptor mit einer großen Affinität zum Liganden angeordnet ist, liefert dann bereits bei einer geringen Konzentration des Liganden in einem in der Messkammer befindlichen, zu untersuchenden Analyten ein Messsignal. Ein Strahlungsempfänger, auf dem ein Rezeptor mit einer geringeren Affinität zum Liganden angeordnet ist, liefert erst bei einer entsprechend höheren Konzentration des Liganden ein Messsignal, wenn sich das Messsignal des zuerst genannten Strahlungsempfängers eventuell bereits in der Sättigung befindet. Ein Vorrichtung, die eine entsprechende Anzahl Rezeptoren mit abgestufter Affinität aufweist, ermöglicht somit eine Konzentrationsbestimmung des Liganden mit großer dynamischer Breite. Die Vorrichtung ermöglicht es dadurch, sowohl bei Liganden mit hoher Konzentration als auch bei Liganden mit niedriger Konzentration jeweils mit grosser Genauigkeit eine Messung der Konzentration des Liganden durchzuführen, ohne dass dazu eine aufwendige und umständliche Verdünnung des Liganden erforderlich ist. Die Rezeptoren können Antikörper sein, die gegen verschiedene Epitope des gleichen Liganden auf die einzelnen Strahlungsempfänger aufgebracht sind, die aber verschiedene Bindungskonstanten aufweisen. Es ist aber auch möglich, dass die Affinität wenigstens eines Antikörpers durch eine chemische Behandlung reduziert ist.

Nachfolgend sind Ausführungsbeispiele der Erfindung anhand der Zeichnung näher erläutert. Es zeigen zum Teil stärker schematisiert.
- Fig. 1: einen Querschnitt durch eine Durchflussmesskammer, in deren Innenhöhlung ein Lumineszenz-Stoff angeordnet ist, wobei die Durchflussmesskammer Strahlungsempfänger zum Messen der Lumineszenzstrahlung aufweist,
- Fig. 2: einen Querschnitt durch eine Vorrichtung mit einer Durchflussmesskammer, die einen für eine Anregungs-Strahlung durchlässigen Wandungsbereich hat, dem eine reflektierende Begrenzungswand gegenüberliegt, wobei die Anregungs-Strahlung schematisch in Form von Strahlen dargestellt ist,
- Fig. 3: einen Querschnitt durch eine Durchflussmesskammer, die einen als Wellenleiter ausgebildeten Wandungsbereich hat, in dem die Anregungsstrahlung geführt wird,
- Fig. 4: einen Querschnitt durch einen Strahlungsempfänger, auf dem eine Rezeptorschicht immobilisiert ist, die durch einen Lumineszenz-Stoff markierte Liganden bindet,
- Fig. 5: eine Darstellung ähnlich Fig. 4, wobei der Lumineszenz-Stoff mit Hilfe von Anregungs-Strahlung zur Abgabe von Lumineszenz-Strahlung angeregt wird, wobei die Anregungs-Strahlung und die Lumineszenz-Strahlung schematisch in Form von Strahlen dargestellt sind,
- Fig.6: einen Teilquerschnitt durch einen Wandungsbereich der Messkammer, der mehrere Strahlungsempfänger aufweist, auf denen Rezeptoren immobilisiert sind, und
- Fig.7: eine graphische Darstellung der spektralen Empfindlichkeit einer Photodiode, wobei auf der Abszisse die Wellenlänge in Nanometern und auf der Ordinate die Quanteneffizienz in Prozent aufgetragen ist.

Eine im Ganzen mit 1 bezeichnete Vorrichtung zum Detektieren mindestens eines Lumineszenz-Stoffs 2 weist eine in der Zeichnung nur schematisch dargestellte Strahlungsquelle 3 auf, die derart angeordnet ist, dass eine von ihr ausgesandte Anregungsstrahlung 4 auf den Lumineszenz-Stoff 2 auftrifft. Die Strahlungsquelle 3 kann beispielsweise eine Halbleiterstrahlungsquelle sein, insbesondere eine Leuchtdiode oder eine Laserdiode. Das Spektrum der Anregungsstrahlung 4 weist mindestens eine Anregungswellenlänge auf, bei weicher der Lumineszenz-Stoff 2 zur Abgabe von Lumineszenzstrahlung 5 angeregt wird.

Der Lumineszenz-Stoff 2 ist in der Innenhöhlung 6 einer Messkammer 7 angeordnet, deren Wandungen für die Lumineszenzstrahlung 5 im Wesentlichen undurchlässig sind. Die Messkammer 7 hat einen der Strahlungsquelle 3 zugewandten, für die Anregungs-Strahlung 3 durchlässigen Wandungsbereich, der durch ein scheiben- oder plattenförmiges Silzium-Halbleitersubstrat 8 gebildet ist. Das Halbleitersubstrat 8 kann bei der Fertigung der Messkammer 7 aus einem Silizium-Wafer kostengünstig hergestellt werden.

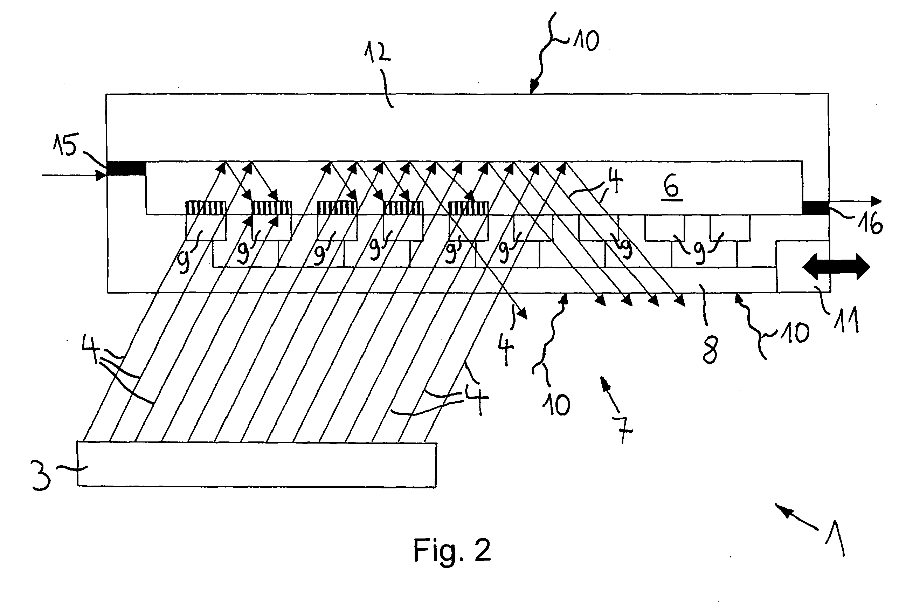

In Fig. 2 ist erkennbar, dass die Strahlungsquelle 3 außerhalb der Messkammer 7 angeordnet ist, und dass die Anregungsstrahlung 4 durch das Halbleitersubstrat 8 hindurch in die Innenhöhlung 6 der Messkammer 7 eingekoppelt wird. Zum Detektieren der von dem Lumineszenz-Stoff 2 ausgesandten Lumineszenzstrahlung 5 sind auf dem Halbleitersubstrat 8 mehrere, jeweils als Photodioden ausgebildete Strahlungsempfänger 9 angeordnet, die mit Ihrer Detektionsseite der Innenhöhlung 6 der Messkammer 7 zugewandt sind.

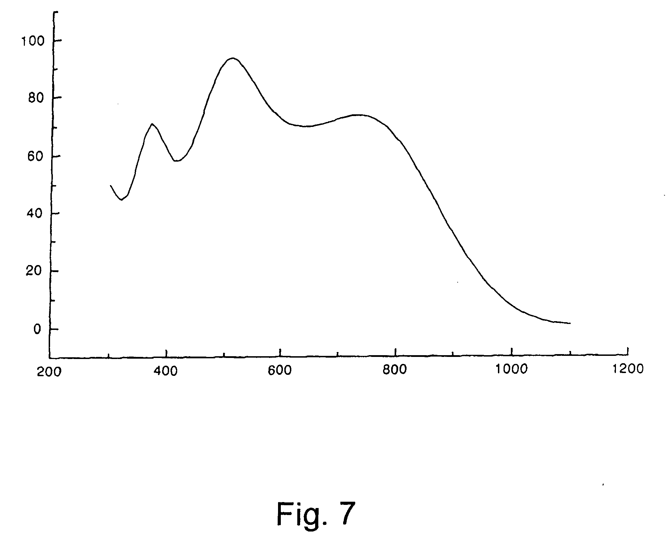

Die Spelstralverteilung der Anregungsstrahlung 4 liegt in einem Wellenlängenbereich, der oberhalb von etwa 1080 nm angeordnet ist. Wie in Fig. 7 erkennbar ist, sind die Strahlungsempfänger 9 in diesem Wellenlängenbereich unempfindlich. Bei dem Lumineszenz-Stoff 2 handelt es sich um einen aufwärtskonvertierenden Lumineszenz-Stoff 2, bei dem die Wellenlänge der Lumineszenzstrahlung 5 kleiner ist als die Wellenlänge der Anregungs-Strahlung 3. Die für die Emission eines Lumineszenz-Strahlungsquants benötigte Energie wird dabei aus mehreren Strahlungsquanten der Strahlungsquelle 3 bezogen. Das Spektrum der Lumineszenz-Strahlung liegt in einem Wellenlängenbereich unterhalb von 1080 nm, in dem die Strahlungsempfänger 9 empfindlich sind. Die Strahlungsempfänger 9 detektieren also nur die Lumineszenzstrahlung 5, nicht jedoch die Anregungsstrahlung 4. Die Messkammer 7 ist für Strahlung, die in dem Wellenlängenbereich liegt, in dem die Strahlungsempfänger 9 empfindlich sind, im Wesentlichen undurchlässig. Somit sind die Strahlungsempfänger 9 durch die Messkammer 7 gegen außerhalb der Messkammer 7 auftretende Störstrahlung 10 abgeschirmt.

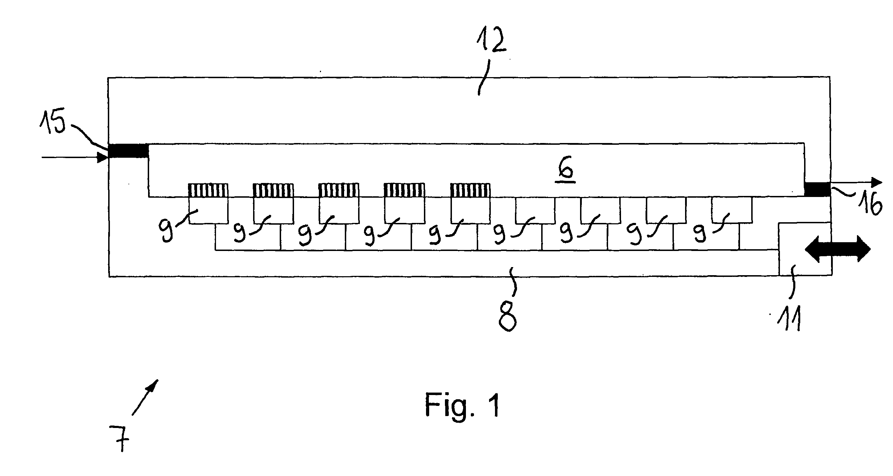

In Fig. 1 bis 3 ist erkennbar, dass die Strahlungsempfänger 9 über Leiterbahnen mit einer in das Halbleitersubstrat integrierten Ansteuerungs- und Auswerteeinrichtung 11 verbunden sind. Die Auswerteeinrichtung 11 hat eine in der Zeichnung schematisch dargestellte Schnittstelleneinrichtung zum Verbinden mit einer übergeordneten Anzeige- und/oder Auswerteeinheit, beispielsweise einem Mikrocomputer.

Bei dem Ausführungsbeispiel nach Fig. 2 ist die dem Halbleitersubstrat 8 gegenüberliegende Begrenzungswand 12 der Messkammer 7 als Reflektor ausgebildet, an dem die durch das Halbleitersubstrat hindurch in die Innenhöhlung 6 der Messkammer 7 eingekoppelte Anregungsstrahlung 4 in die Innenhöhlung 6 zurückreflehtierf wird. Die in die Messkammer 7 eingekoppelte Anregungsstrahlung 4 wird dadurch mehrfach durch die Messkammer 7 geleitet und somit besser zur Anregung des Lumineszenz-Stoffs 2 genutzt. Die Begrenzungswand 12 weist einen Grundkörper aus Silizium auf, der an seiner der Innenhöhlung 6 zugewandten Innenseite mit einer die Anregungsstrahlung 4 reflektierenden Beschichtung versehen ist.

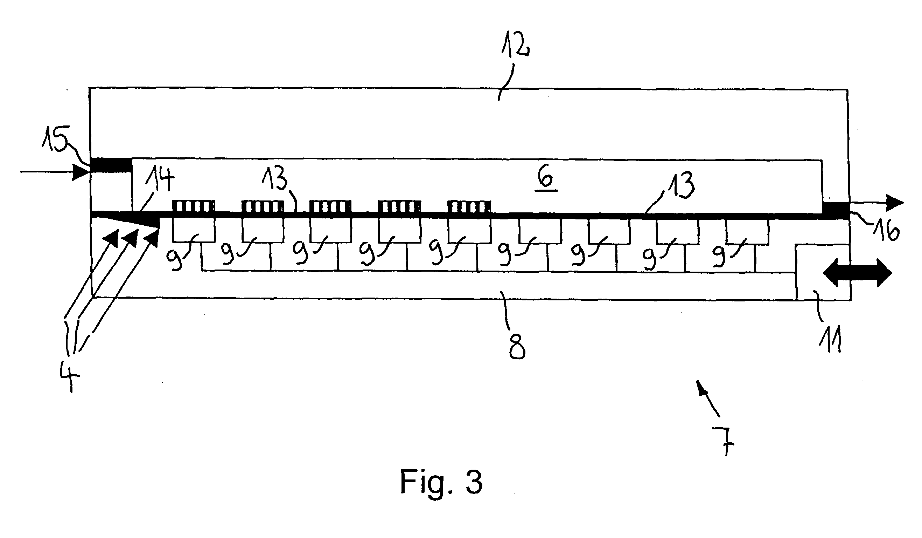

Bei dem in Fig. 3 gezeigten Ausführungsbeispiel ist das Halbleitersubstrat 8 über einen optischen Wellenleiter 13 mit der Innenhöhlung der Messkammer 7 verbunden. Die Anregungsstrahlung 4 durchdringt - ausgehend von der Strahlungsquelle 3 zu der Innenhöhlung 6 - zunächst das Halbleitersubstrat 8 und trifft dann auf ein optisches Fenster des Wellenleiters 13 auf, an dem die Anregungsstrahlung 4 in den Wellenleiter 13 eingekoppelt wird. Das optische Fenster ist an einem prismenförmigen Einkoppelelement 14 vorgesehen. Der Wellenleiter 13 ist als Wellenleiterschicht ausgebildet, die etwa parallel zur Erstreckungsebene des Halbleitersubstrats 8 verläuft und an der der Innenhöhlung 6 zugewandten Innenseite des Halbleitersubstrats 8 angeordnet ist. Bei dem Ausführungsbeispiel nach Fig. 3 erstreckt sich die Wellenleiterschicht 13 durchgängig über die Strahlungsempfänger 9. Es sind aber auch andere Ausführungsformen denkbar, bei denen die Wellenleiterschicht 13 im Bereich der Strahlungsempfänger 9 Unterbrechungen aufweisen kann. Die Anregung des Lumineszenzstoffs erfolgt über das Evaneszenzfeld der in dem Wellenleiter 13 geführten Anregungsstrahlung 4, das sich bis in die Innenhöhlung 6 erstreckt.

In Fig. 1 bis 3 ist noch erkennbar, dass die Messkammer 7 als Flusszelle oder Durchflussmesskammer mit einer Einlassöffnung 15 und einer Auslassöffnung 16 ausgebildet ist. In der Messkammer 7 können Nachweisreaktionen durchgeführt werden.

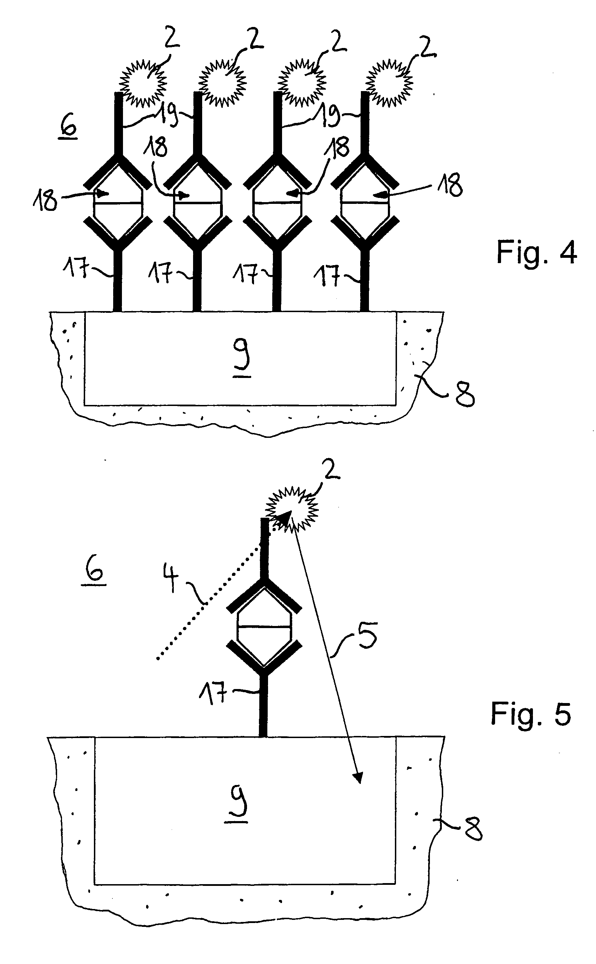

In Fig. 4 ist erkennbar, dass in der Innenhöhlung der Messkammer auf dem Strahlungsempfänger 9 ein Rezeptor 17 immobilisiert ist, der an einen spezifischen Liganden bindet. Die Immobilisierung des Rezeptors 17 kann beispielsweise durch eine Silanisierung oder eine auf dem Strahlungsempfänger 9 angeordnete Polyimidschicht erreicht werden, an welcher der Rezeptor 17 anhaftet. Der Rezeptor 17 kann auf den Strahlungsempfänger 9 bzw. die darauf befindliche Polyimidschicht aufgedruckt sein. Bei dem Ausführungsbeispiel nach Fig. 4 ist der Rezeptor 17 ein erster Antikörper gegen ein bestimmtes Epitop 18 des Liganden. Nach Bindung des Epitops 18 an den Rezeptor 17 wird der so gebildete, aus dem Epitop 18 und dem Rezeptor 19 bestehende Antikörperkomplex mittels eines zweiten, an das Epitop 18 bindenden Antikörpers 19 markiert. Dieser Antikörper 19 ist direkt oder indirekt mit dem Lumineszenz-Stoff 2 markiert. Der Lumineszenz-Stoff 2 kann beispielsweise ein fluoreszierender Farbstoff sein.

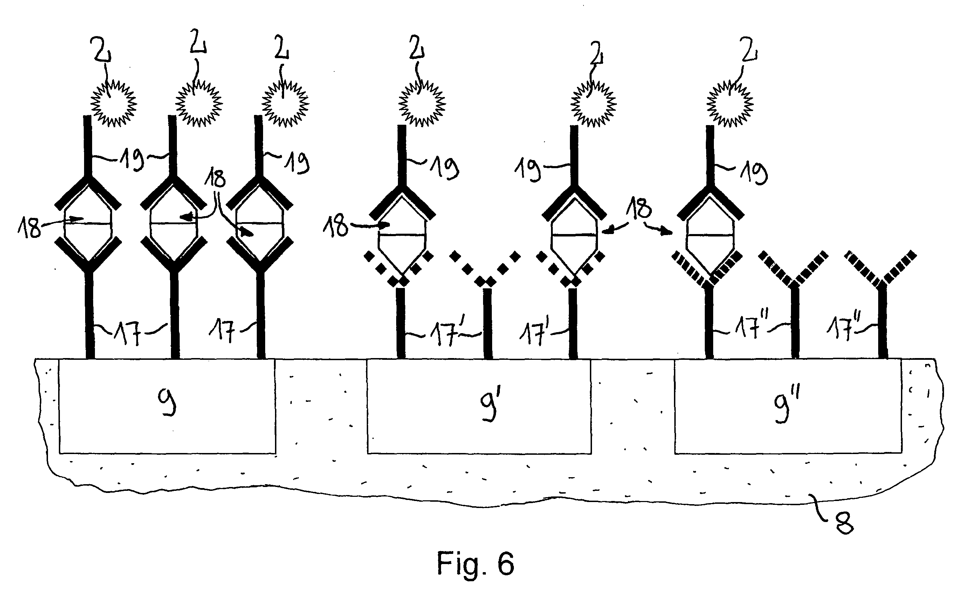

Bei dem Ausführungsbeispiel nach Fig. 6 weist das Halbleitersubstrat 8 mehrere nebeneinander angeordnete Strahlungsempfänger 9, 9, 9 auf, auf denen unterschiedliche Rezeptoren 17, 17, 17 immobilisiert sind. Die Rezeptoren sind so ausgewählt, dass sie eine für einen bestimmten Liganden eine unterschiedliche, abgestufte Affinität aufweisen. Dabei hat der Rezeptor 17 eine große, der Rezeptor 17 eine mittlere und der Rezeptor 17 eine geringe Affinität für das Epitop 18 des Liganden. Demnach bindet an den Rezeptor 17 eine größere Anzahl Liganden als an den Rezeptor 17. In entsprechender Weise ist die Anzahl der Liganden, die an den Rezeptor 17 binden, größer als die Anzahl der an den Rezeptor 17 bindenden Liganden. Da die Liganden mit dem Lumineszenz-Stoff 2 markiert sind und dieser mittels der Strahlungsquelle 3 zur Emission von Lumineszenzstrahlung angeregt wird, ergibt sich an dem Strahlungsempfänger 9 eine größere Intensität der Lumineszenzstrahlung als an dem Strahlungsempfänger 9. In entsprechender Weise ist die Intensität der Lumineszenzstrahlung an dem Strahlungsempfänger 9' größer als an dem Strahlungsempfänger 9 . Aus den Messsignalen der Strahlungsempfänger 9, 9, 9 kann also auf die Konzentration der Liganden rückgeschlossen werden. Aufgrund der abgestuften Affinität der unterschiedlichen Rezeptoren 17, 17, 17 ermöglicht die Vorrichtung 1 eine Konzentrationsbestimmung des Liganden mit großer dynamischer Breite.

Die Vorrichtung 1 zum Detektieren mindestens eines Lumineszenz-Stoffs 2 hat also eine Strahlungsquelle 3 zur Aussendung von Anregungsstrahlung 4 auf den mindestens einen Lumineszenz-Stoff 2. Die Anregungsstrahlung 4 weist wenigstens eine Anregungswellenlänge auf, bei welcher der Lumineszenz-Stoff 2 zur Abgabe von Lumineszenzstrahlung 5 angeregt wird. Zum Detektieren der Lumineszenzstrahlung 5 ist wenigstens ein Strahlungsempfänger 9, 9, 9 vorgesehen, der bezüglich seiner spektralen Empfindlichkeit derart ausgebildet ist, dass er für die von der Strahlungsquelle 3 ausgesandte Anregungsstrahlung 4 unempfindlich ist. Der Lumineszenz-Stoff 2 ist im inneren einer für die Lumineszenzstrahlung 5 im Wesentlichen undurchlässigen Messkammer 7 angeordnet, die wenigstens einen für die von der Strahlungsquelle 3 ausgesandte Anregungsstrahlung 4 transparenten Wandungsbereich hat. Die Strahlungsquelle 3 ist außerhalb der Messkammer 7 angeordnet, derart, dass die von der Strahlungsquelle 3 ausgesandte Anregungsstrahlung 4 durch den Wandungsbereich hindurch in das Innere der Messkammer 7 eingekoppelt wird.

## Patentansprüche

1. Vorrichtung (1) zum Detektieren mindestens eines Lumineszenz-Stoffs (2), mit einer Strahlungsquelle (3) zur Aussendung von Anregungsstrahlung (4) auf den mindestens einen Lumineszenz-Stoff (2), wobei die Anregungsstrahlung (4) wenigstens eine Anregungswellenlänge aufweist, bei welcher der Lumineszenz-Stoff (2) zur Abgabe von Lumineszenzstrahlung (5) angeregt wird, mit wenigstens einem für die Anregungsstrahlung (4) unempfindlichen Strahlungsempfänger (9, 9', 9") zum Detektieren der Lumineszenzstrahlung (5), wobei der Lumineszenz-Stoff (2) im Inneren einer Messkammer (7) angeordnet ist, die für die Strahlung, für die der Strahlungsempfänger (9, 9', 9") empfindlich ist, im Wesentlichen undurchlässig ist, und wobei die Strahlungsquelle (3) außerhalb der Messkammer (7) derart angeordnet ist, dass die Anregungsstrahlung (4) durch einen der Strahlungsquelle (3) zugewandten, für die Anregungsstrahlung (4) transparenten Wandungsbereich der Messkammer (7) hindurch in das Innere der Messkammer (7) eingekoppelt wird, **dadurch gekennzeichnet, dass** der Wandungsbereich durch ein Halbleitersubstrat (8) gebildet ist, und dass der wenigstens eine Strahlungsempfänger (9, 9', 9") als Halbleiterbauelement in das Halbleitersubstrat integriert ist.

2. Vorrichtung (1) nach Anspruch 1, **dadurch gekennzeichnet, dass** der Lumineszenz-Stoff (2) derart ausgebildet ist, dass die Wellenlänge der Lumineszenzstrahlung (5) kleiner ist als die Anregungswellenlänge.

3. Vorrichtung (1) nach Anspruch 1 oder 2, **dadurch gekennzeichnet, dass** das Halbleitersubstrat (8) ein Siliziumsubstrat ist.

4. Vorrichtung (1) nach einem der Ansprüche 1 bis 3, **dadurch gekennzeichnet, dass** sie als Wärmebildkamera ausgebildet, die in der Messkammer (7) eine Vielzahl von vorzugsweise in Form einer zweidimensionalen Matrix angeordneten Strahlungsempfängern, (9, 9', 9") aufweist, denen wenigstens eine Abbildungsoptik zum Abbilden der Strahlungsquelle (3) auf die Strahlungsempfänger (9, 9', 9") zugeordnet ist.

5. Vorrichtung (1) nach einem der Ansprüche 1 bis 4, **dadurch gekennzeichnet dass** eine dem Wandungsbereich gegenüberliegende Begrenzungswand (12) der Messkammer (7) als Reflektor zum Reflektieren der Anregungsstrahlung (4) ausgebildet ist.

6. Vorrichtung (1) nach einem der Ansprüche 1 bis 5, **dadurch gekennzeichnet, dass** der transparente Wandungsbereich über einen optischen Wellenleiter (13) mit dem Inneren (6) der Messkammer (7) verbunden ist, und dass der Wellenleiter (13) vorzugsweise parallel zur Erstreckungsebene des transparenten Wandungsbereichs, insbesondere an dessen dem Lumineszenz-Stoff (2) zugewandter Innenseite verläuft.

7. Vorrichtung (1) nach einem der Ansprüche 1 bis 6, **dadurch gekennzeichnet, dass** ein Messsignalausgang mindestens eines Strahlungsempfängers (9, 9', 9") mit einem Transponder zur Übertragung des Messsignals oder eines daraus abgeleiteten Signals zu einem Empfängerteil verbunden ist, und dass der Transponder vorzugsweise in das Halbleitersubstrat (8) integriert ist.

8. Vorrichtung (1) nach einem der Ansprüche 1 bis 7, **dadurch gekennzeichnet, dass** im Inneren (6) der Messkammer (7) wenigstens zwei Lumineszenz-Stoffe (2) mit voneinander abweichender Anregungswellenlänge angeordnet sind, und dass jedem dieser Lumineszenz-StofFe (2) jeweils eine Strahlungsquelle (3) mit an die Anregungswellenlänge des jeweiligen Lumineszenz-Stoffs (2) angepasster Spektralverteilung zugeordnet ist.

9. Vorrichtung (1) nach einem der Ansprüche 1 bis 8, **dadurch gekennzeichnet, dass** die Messkammer (7) als Durchflussmesskammer mit einer Innenhöhlung (6), wenigstens einer Einlassöffnung (15) und mindestens einer Auslassöffnung (16) ausgebildet ist.

10. Vorrichtung (1) nach einem der Ansprüche 1 bis 9, **dadurch gekennzeichnet, dass** in der Innenhöhlung (6) an der Oberfläche wenigstens eines Strahlungsempfängers (9, 9', 9'') mindestens ein Rezeptor (17, 17', 17*"*) für einen Liganden, insbesondere für ein Biomolekül, eine biologische Zelle und/oder wenigstens ein Fragment einer solchen immobilisiert ist, und dass der Ligand mit dem mindestens einen lumineszenz-Stoff (2) markiert ist.

11. Vorrichtung (1) nach einem der Ansprüche 3 bis 10, **dadurch gekennzeichnet dass** auf dem Halbleitersubstrat (8) mehrere Strahlungsempfänger (9, 9', 9'') vorzugsweise in Form eines zweidimensionalen Arrays, nebeneinander angeordnet sind, und dass auf den Strahlungsempfängern (9, 9', 9'') gegebenenfalls unterschiedliche Rezeptoren (17,17', 17") angeordnet sind

12. Vorrichtung (1) nach Anspruch 10 oder 11, **dadurch gekennzeichnet, dass** wenigstens zwei der unterschiedlichen Rezeptoren (17, 17', 17'') eine unterschiedliche Affinität für wenigstens einen mit dem Lumineszenz-Stotf (2) markierten Liganden aufweisen, und dass gegebenenfalls mehr als zwei Rezeptoren (17, 17', 17") vorgesehen sind, die eine abgestufte Affinität für den wenigstens einen Liganden aufweisen.

## Claims

1. Device (1) for the detection of at least one luminescent substance (2), having a radiation source (3) for transmitting excitation radiation (4) to the at least one luminescent substance (2), the excitation radiation (4) having at least one excitation wavelength, at which the luminescent substance (2) is excited so as to output luminescent radiation (5), having at least one radiation receiver (9, 9', 9"), which is insensitive to the excitation radiation (4), for the detection of the luminescent radiation (5), the luminescent substance (2) being arranged in the interior of a measuring chamber (7), which is substantially impermeable to the radiation to which the radiation receiver (9, 9', 9") is sensitive, and the radiation source (3) being arranged outside the measuring chamber (7) such that the excitation radiation (4) is injected into the interior of the measuring chamber (7) through a wall region of the measuring chamber (7), which wall region faces the radiation source (3) and is transparent to the excitation radiation (4), **characterized in that** the wall region is formed by a semiconductor substrate (8), and **in that** the at least one radiation receiver (9, 9', 9'') is integrated in the semiconductor substrate in the form of a semiconductor component.

2. Device (1) according to Claim 1, **characterized in that** the luminescent substance (2) is formed such that the wavelength of the luminescent radiation (5) is smaller than the excitation wavelength.

3. Device (1) according to Claim 1 or 2, **characterized in that** the semiconductor substrate (8) is a silicon substrate.

4. Device (1) according to one of Claims 1 to 3, **characterized in that** it is in the form of a thermal imaging camera which, in the measuring chamber (7), has a large number of radiation receivers (9, 9', 9''), which are preferably arranged in the form of a two-dimensional matrix and to which at least one imaging optic for imaging the radiation source (3) onto the radiation receivers (9, 9', 9' ') is assigned.

5. Device (1) according to one of Claims 1 to 4, **characterized in that** a boundary wall (12) of the measuring chamber (7), which boundary wall is opposite the wall region, is in the form of a reflector for reflecting the excitation radiation (4).

6. Device (1) according to one of Claims 1 to 5, **characterized in that** the transparent wall region is connected to the interior (6) of the measuring chamber (7) via an optical waveguide (13), and **in that** the waveguide (13) preferably runs parallel to the plane of extent of the transparent wall region, in particular on its inner side facing the luminescent substance (2).

7. Device (1) according to one of Claims 1 to 6, **characterized in that** a measurement signal output of at least one radiation receiver (9, 9', 9'') is connected to a transponder for transmitting the measurement signal or a signal derived therefrom to a receiver part, and **in that** the transponder is preferably integrated in the semiconductor substrate (8).

8. Device (1) according to one of Claims 1 to 7, **characterized in that** at least two luminescent substances (2) with differing excitation wavelengths are arranged in the interior (6) of the measuring chamber (7), and **in that** in each case one radiation source (3) with a spectral distribution which is matched to the excitation wavelength of the respective luminescent substance (2) is assigned to each of these luminescent substances (2).

9. Device (1) according to one of Claims 1 to 8, **characterized in that** the measuring chamber (7) is in the form of a throughflow-measuring chamber with an inner cavity (6), at least one inlet opening (15) and at least one outlet opening (16).

10. Device (1) according to one of Claims 1 to 9, **characterized in that** at least one receptor (17, 17', 17'') for a ligand, in particular for a biomolecule, a biological cell and/or at least one fragment of the same, is immobilized in the inner cavity (6) on the surface of at least one radiation receiver (9, 9', 9"), and **in that** the ligand is marked by the at least one luminescent substance (2).

11. Device (1) according to one of Claims 3 to 10, **characterized in that** a plurality of radiation receivers (9, 9', 9'') are arranged next to one another, preferably in the form of a two-dimensional array, on the semiconductor substrate (8), and **in that** possibly different receptors (17, 17', 17'') are arranged on the radiation receivers (9, 9', 9' ').

12. Device (1) according to Claim 10 or 11, **characterized in that** at least two of the different receptors (17, 17', 17'') have a different affinity for at least one ligand marked by the luminescent substance (2), and **in that** possibly more than two receptors (17, 17', 17") are provided, which have a graded affinity for the at least one ligand.

## Revendications

1. Dispositif (1) de détection d'au moins une matière luminescente (2), avec une source de rayonnement (3) pour émettre un rayonnement d'excitation (4) sur la matière luminescente (2) au moins unique, sachant que le rayonnement d'excitation (4) présente au moins une longueur d'onde d'excitation à laquelle la matière luminescente (2) est excitée pour délivrer un rayonnement luminescent (5), et avec au moins un récepteur de rayonnement (9, 9', 9") insensible au rayonnement d'excitation (4) et destiné à détecter le rayonnement luminescent (5), sachant que la matière luminescente (2) est disposée à l'intérieur d'une chambre de mesure (7) qui est essentiellement imperméable au rayonnement auquel le récepteur de rayonnement (9, 9', 9") est sensible, et sachant que la source de rayonnement (3) est disposée en dehors de la chambre de mesure (7) de telle sorte que le rayonnement d'excitation (4) est injecté à l'intérieur de la chambre de mesure (7) à travers une région de paroi de la chambre de mesure (7) qui est tournée vers la source de rayonnement (3) et est transparente pour le rayonnement d'excitation (4), **caractérisé en ce que** la région de paroi est formée par un substrat semi-conducteur (8), et **en ce que** le récepteur de rayonnement (9, 9', 9") au moins unique est intégré dans le substrat semi-conducteur en tant que composant semi-conducteur.

2. Dispositif (1) selon la revendication 1, **caractérisé en ce que** la matière luminescente (2) est réalisée de telle sorte que la longueur d'onde du rayonnement luminescent (5) est inférieure à la longueur d'onde d'excitation.

3. Dispositif (1) selon la revendication 1 ou 2, **caractérisé en ce que** le substrat semi-conducteur (8) est un substrat de silicium.

4. Dispositif (1) selon l'une quelconque des revendications 1 à 3, **caractérisé en ce qu'**il est réalisé sous forme de caméra thermique qui présente dans la chambre de mesure (7) une pluralité de récepteurs de rayonnement (9, 9', 9") disposés de préférence sous la forme d'une matrice bidimensionnelle et auxquels est associé au moins un élément optique de projection pour projeter la source de rayonnement (3) sur les récepteurs de rayonnement (9, 9', 9").

5. Dispositif (1) selon l'une quelconque des revendications 1 à 4, **caractérisé en ce qu'**une paroi de délimitation (12) de la chambre de mesure (7) qui est opposée à la région de paroi est réalisée sous forme de réflecteur pour réfléchir le rayonnement d'excitation (4).

6. Dispositif (1) selon l'une quelconque des revendications 1 à 5, **caractérisé en ce que** la région de paroi transparente est reliée par l'intermédiaire d'un guide d'ondes optiques (13) à l'intérieur (6) de la chambre de mesure (7), et **en ce que** le guide d'ondes (13) s'étend de préférence parallèlement au plan de développement de la région de paroi transparente, notamment sur le côté intérieur de celle-ci qui est tourné vers la matière luminescente (2).

7. Dispositif (1) selon l'une quelconque des revendications 1 à 6, **caractérisé en ce qu'**une sortie de signal de mesure d'au moins un récepteur de rayonnement (9, 9', 9'') est reliée à un transpondeur pour transmettre le signal de mesure ou un signal dérivé de ce dernier à un élément récepteur, et **en ce que** le transpondeur est de préférence intégré dans le substrat semi-conducteur (8).

8. Dispositif (1) selon l'une quelconque des revendications 1 à 7, **caractérisé en ce qu'**au moins deux matières luminescentes (2) ayant des longueurs d'onde d'excitation différentes sont disposées à l'intérieur (6) de la chambre de mesure (7), et **en ce qu'**à chacune de ces matières luminescentes (2) est associée une source de rayonnement (3) respective ayant une distribution spectrale adaptée à la longueur d'onde d'excitation de la matière luminescente (2) respective.

9. Dispositif (1) selon l'une quelconque des revendications 1 à 8, **caractérisé en ce que** la chambre de mesure (7) est réalisée sous forme de chambre de mesure à écoulement ayant une cavité intérieure (6), au moins une ouverture d'admission (15) et au moins une ouverture d'évacuation (16).

10. Dispositif (1) selon l'une quelconque des revendications 1 à 9, **caractérisé en ce qu'**au moins un récepteur (17, 17', 17") pour un ligand, en particulier pour une biomolécule, une cellule biologique et/ou au moins un fragment d'une telle molécule ou cellule, est immobilisé dans la cavité intérieure (6) sur la surface d'au moins un récepteur de rayonnement (9, 9', 9"), et **en ce que** le ligand est marqué par la matière luminescente (2) au moins unique.

11. Dispositif (1) selon l'une quelconque des revendications 3 à 10, **caractérisé en ce que** plusieurs récepteurs de rayonnement (9, 9', 9") sont disposés en juxtaposition sur le substrat semi-conducteur (8), de préférence sous la forme d'un réseau bidimensionnel, et **en ce que** des récepteurs différents (17, 17', 17") sont éventuellement disposés sur les récepteurs de rayonnement (9, 9', 9").

12. Dispositif (1) selon la revendication 10 ou 11, **caractérisé en ce qu'**au moins deux des récepteurs différents (17, 17', 17") présentent une affinité différente pour au moins un ligand marquant la matière luminescente (2), et **en ce qu'**il est éventuellement prévu plus de deux récepteurs (17, 17', 17'') qui présentent une affinité échelonnée pour le ligand au moins unique.
